# EUROPEAN PATENT APPLICATION

(11) **EP 2 219 297 A1**
(43) Date of publication of application: **18.08.2010**
(21) Application number: 09250372.1
(22) Date of filing: 13.02.2009
(51) Int. Cl.: H04B 3/54

(54) **Electrically powered communications device**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

A data communications device 20 is connected by a cable 58 to a conventional electrical plug 69. The cable 58 is connected to a PLT (power line technology) modem 21 housed integrally within the device 20. By integrating the power line telecommunication modem 21 into the device itself, the device 20 may be connected to the network without a separate intermediate modem. This simplifies the operation of the device for the user, as there is only one external connection to be made, and a separate connection to an external PLT modem, which would require a separate electric socket, is not required.

## Description

This invention relates to electrically powered communications devices, and in particular devices intended for communication with each other over a local network, such as within domestic premises. In general there is one "hub" device connected to an external data connection such as a telephone line, and several other devices communicating through the hub with each other and the external network. These other devices may be general-purpose computers, or dedicated terminals for connection to internet streaming or broadcast services, voice terminals (VoIP telephones), monitoring equipment, or for other specific purposes.

There are several methods by which data can be transmitted between such devices. Conventionally they use fixed cables, such as Ethernet or USB connections, plugged into the hub and the individual devices. However, this becomes difficult to arrange when the devices are a long way apart, as it requires long cable runs, which are difficult to install, and inflexible in use. A popular alternative is to use wireless connections, but wireless communication can be difficult to achieve in a large building, and there can be difficulties with interference with neighbouring users. Such systems also present security problems as other, unauthorised, users may be able to detect the transmissions of the wireless transceivers, or to seize control of the system by transmitting signals into the premises for interception by the wireless transceivers.

A further method makes use of an existing cable system already present throughout most premises - namely the electricity supply. It is possible to carry data over the internal house wiring, using special transceivers connected to the mains wiring through conventional electric power sockets. This technology is known as "power line telecommunications (PLT)". Typical PLT systems use multiple carriers and different timeslots for data injected onto the mains electricity network.

The system is an application of orthogonal frequency division multiplex - OFDM - technology. Effectively a comb of carriers, from 4MHz to 30MHz or so, switch on and off in different timeslots. These carrier frequencies are very much higher than the standard electricity supply, which is typically at 50-60Hz depending on national standards. It may be necessary to install a filter between the internal wiring and the external mains supply to prevent signals straying into or out of the domestic circuits, but otherwise no modification to the internal circuits of the building is normally required to install such a system in a domestic or business premises.

It should be mentioned that PLT systems also exist that communicate over longer distances, making use of the utility operators' low voltage mains supply networks.

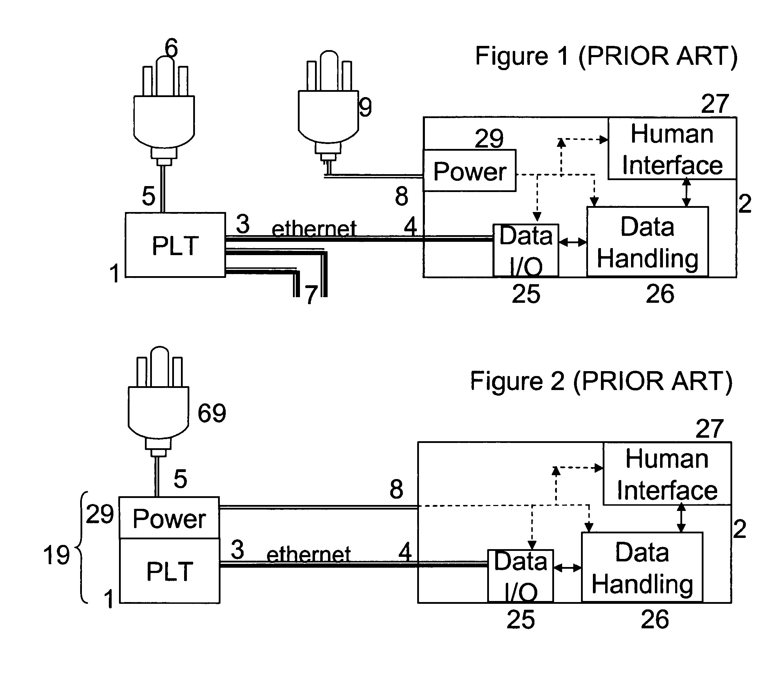

Figure 1 depicts a conventional PLT modem 1 connected to a data communications device 2 to a data network carried by a household mains electrical supply. The modem 1 has an Ethernet or USB connection 3 to carry data to and from a complementary connection 4 on the data communications device 2. It also has an electrical power supply 5 attached to a conventional electrical plug 6. The plug 6 and modem 1 are often integrated into one unit, with no cable 5 between them.. Further ethernet connections 7 may be provided for connection from the PLT unit 1 to further devices.

The conventional data communications device 2 has various functional elements depicted generally at 25, 26, 27, 29. These will vary in detail from one device to another depending on the purpose of the individual device, so will not be described in detail here.

The PLT modem extracts data from the high frequency PLT data carrier signals, and can also apply outgoing data on to the carriers.

The data communications device 2 requires a power supply, for which a separate cable 8 and plug 9 are required. This arrangement therefore requires two power sockets to be available for the device to be used. Each device to be connected to the network requires a separate PLT modem through which it may be connected, unless they are all close enough to the same PLT modem to allow connection through additional cables as depicted by reference numeral 7.

Figure 2 shows an alternative prior art configuration in which the power management system 29 (transformer and rectifier) and the PLT functions 1 are combined in a single unit 19 connected to (or integral with) one plug 69. This arrangement only requires a single power socket, but still requires a separate unit 19 to be provided, and for the user to make two separate connections 4, 8 to the data communications device 2. The relatively bulky power / PLT unit 19 can be difficult and untidy to accommodate close to the data communications device 2 itself. If it is integrated with the plug 69 it provides a relatively bulky unit to connect to the electric power socket, and results in two relatively long cables 3, 8 which can get entangled with each other, and with any other cables connected to the same socket, or to the data communications device 2.

The present invention provides an electrically powered communications device comprising a housing, within which are located a transceiver for receiving and transmitting data, a power supply management system for connection to a power supply and distributing power to the transceiver and other components of the device, and an integral power line telecommunications modem for connection to a power supply connection and enabled so that network data carried on the power connection is extracted and delivered to the transceiver, and network data generated by the transceiver is modulated onto the power connection.

By integrating the power line telecommunication modem into the device itself, the device may be connected to the network without a separate intermediate modem. This allows the device to be moved from a first location to a second location without the need to provide a separate PLT device at the second location, or to move such a PLT device from the first location to the second location, thereby losing connectivity for any other devices at the first location.

An embodiment of the invention will now be described, by way of example, with reference to the drawings, in which:
Figure 1 depicts a conventional PLT modem connecting a data communications device to a household mains electrical supply carrying a data network, and has already been described;
Figure 2 depicts a second known PLT modem connecting a data communications device to a household mains electrical supply carrying a data network, and has already been described;
Figure 3 depicts a data communications device according to the invention connected directly to a household mains electrical supply carrying a data network.
Figure 4 is a schematic diagram depicting in more detail the functional elements co-operating in the power line telecommunication modem of the data communications device of Figure 3.

It will be understood by those skilled in the art that the elements depicted in the Figures illustrate the functions performed by the respective devices, and the interactions between those functions. The physical embodiment may comprise one or more electronic components configured to perform these various functions.

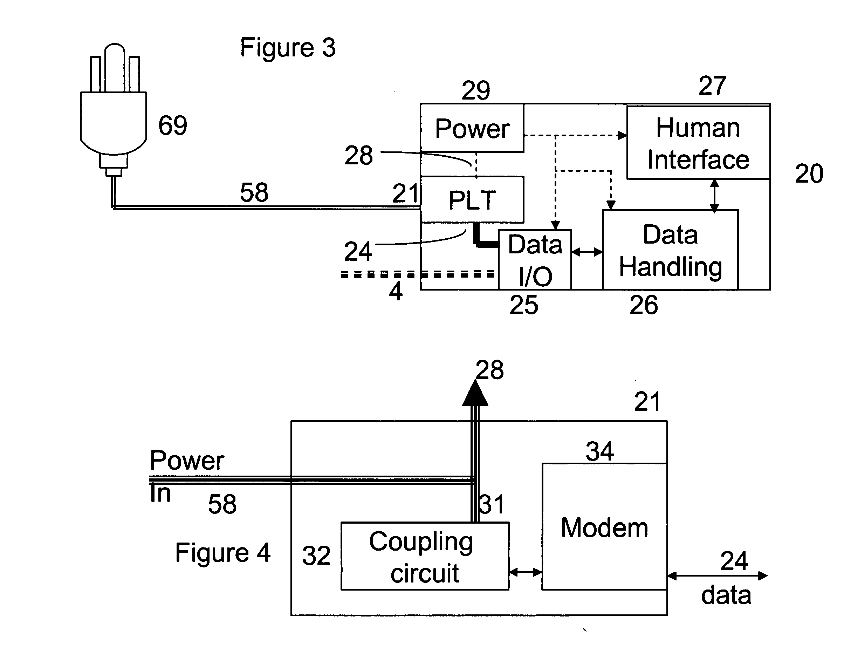

In Figure 3, a data communications device 20 has a data input/output unit 25 for exchanging data with other devices over a communications network, and also has a human interface 27 for receiving instructions from a keyboard, tracker ball, remote control interface, etc and for displaying outputs in visual, audio, haptic or other forms. The exact nature of these interfaces depends on the purpose of the device. The device may also have sensors or controls, (not shown) (either internal or external) for monitoring and controlling phenomena such as temperature, depending on the intended purpose of the device.

The various inputs and outputs 25, 27 are mediated by a data handling function 26, which may comprise a central processor and one or more data stores. These functions 25, 26, 27 all draw power from a power management unit 29.

The device 2 is connected by a cable 58 to a conventional electrical plug 69.
The cable and plug combine the functions of the separate cables 5, 8 and plugs 6, 9 in the prior art system depicted in Figure 1. The cable 58 is connected to a PLT modem 21 housed within the device 20, which is depicted in more detail in Figure 4.

The integral PLT unit 21 operates in a similar way to the prior art separate PLT unit 1 (Figure 1), but the external connections are different. As shown in Figure 4, power is delivered to the PLT unit 21 from a connection 58 and delivered to the power management unit 29 (Figure 3) through a connection 28. A signal is extracted from this mains feed (31) and transformed via a line coupling function 32 to a form suitable for low voltage data handling. A modulator 34 similarly imposes outgoing data onto one (or more) high frequency carriers, which is then coupled to the mains via the line coupling function 32. Depending on the addressing system used by the PLT system, this output may be on the same carrier frequency(ies) as the incoming data, or a different as the modulation scheme requires. The data handled by the modem 34 is exchanged with the transceiver 25 (Figure 3) through a connection 24.

The modulator 34 requires a power supply to generate and receive the signals. This may be provided from the input/output feed 24 or, as shown, from the mains supply.

This arrangement therefore requires only one power socket to be available for the device to be used. The device may be transferred from one location to another connected to the enabled mains network without the need to provide a separate PLT device at the second location, or to lose connectivity for any other devices at the first location.

An ethernet or USB connection 4 may also be provided on the data communications device 20 so that it can be used in conventional manner at locations where a PLT- enabled mains network is not present. If the device 20 is a telecommunications "hub", a suitable connection to the external telecommunications network is also required, communication with the peripheral devices then being made using the PLT-enabled connection 58.

## Claims

1. Electrically powered communications device comprising a housing, within which are located a power supply connection, a transceiver for receiving and transmitting data, a power supply management system for connection to the power supply and distributing power to the transceiver and other components of the device, and an integral power line telecommunication modem for connection to the power supply connection and enabled so that network data carried on the power supply connection is extracted and delivered to the transceiver, and network data generated by the transceiver is modulated onto the power supply connection.

2. Device according to claim 1, further comprising a further data interface for connection to co-operating devices by means other than power line telecommunication technology.

3. Device according to claim 2, wherein the further data interface is an interface for connection to a public telecommunications network, such that the device may act as an interface hub between a local network connected using power line telecommunication technology, and the public telecommunications network.

4. Device according to claim 1 or claim 2, configured to act as a subordinate device interfaced with a communications hub through the power supply connection.
